# DEMANDE DE BREVET EUROPEEN

(11) **EP 0 557 215 A1**
(43) Date de publication de la demande: **25.08.1993**
(21) Numéro de dépôt: 93420067.6
(22) Date de dépôt: 11.02.1993
(51) Int. Cl.: B62D 27/06

(54) **Eléments de ranchers pour superstructure équipant les châssis de véhicules de transport et leur dispositif de verrouillage**

(30) Priorité: 18.02.1992 FR 9202185
(71) Demandeur: SOCIETE DE FABRICATION ET DE COMMERCIALISATION - SOFACO- S.A., F-42405 Saint Chamond Cédex (FR)
(72) Inventeur: Gorgy, Bernard, F-42400 Saint Chamond (FR); Francon, Gérard, F-42400 Saint Chamond (FR); Souchon, Jean, F-42740 Saint Paul en Jarez (FR); Escot, André, F-42320 Farnay (FR)
(74) Mandataire: Dupuis, François

(57) **Abrégé**

Les éléments de ranchers pour superstructures équipant les châssis de véhicules de transport, du type comprenant des ranchers en deux demi-parties articulées à leurs bases inférieure et supérieure, lesdits ranchers s'emboîtant l'un dans l'autre et étant associés par un dispositif de verrouillage, ledit rancher inférieur (1) présentant un profil en U avec deux ailes latérales (1.1) sont remarquables en ce que le rancher inférieur présente, côté extérieur, dans sa partie haute, un logement (1.3) intégré susceptible de constituer la zone de réception et de positionnement de l'extrémité inférieur (2.1) du rancher supérieur (2), ledit rancher supérieur s'engageant dans ledit logement présentant essentiellement une section creuse intérieurement pou autoriser le passage d'un moyen de verrouillage (6) des deux ranchers entre eux, le rancher supérieur présentant des moyens (4) d'articulation susceptibles de coopérer avec des moyens (3) établis à l'extrémité supérieure du rancher inférieur.

## Description

L'invention se rattache au secteur technique des véhicules de transport agencés avec des superstructures de chargement comprenant des montants d'angles et ranchers assemblés au châssis, lesdits ranchers étant amovibles pour faciliter le chargement latéral du véhicule.

Les superstructures de chargement des véhicules comprennent des ranchers réalisés essentiellement en deux demi-parties articulées à leurs bases inférieure et supérieure, lesdits ranchers étant profilés en U pour s'emboîter l'un dans l'autre et être verrouillés par différents systèmes. On connaît par exemple, dans le Brevet Européen 5.120 un dispositif pour rendre amovible et verrouillable les ranchers de superstructures, ce dispositif faisant l'objet d'une exploitation par le Demandeur.

Généralement, le rancher supérieur présente un profil en U avec des ailes débordantes susceptibles de s'emboîter par l'extérieur sur l'extrémité supérieure du rancher inférieur. Un tel agencement, s'il reste fiable, présente néanmoins des inconvénients quant à son coût de fabrication.

L'objet de l'invention était de concevoir des éléments de ranchers simplifiés, d'un coût de revient plus réduit, tout en conservant ses caractéristiques de fiabilité par rapport au système antérieur.

Un autre but selon l'invention était de concevoir un disposif de verrouillage amélioré des ranchers supérieur et inférieur pouvant permettre alternativement et selon les besoins un verrouillage du rancher supérieur, puis du rancher inférieur, ou du rancher inférieur puis du rancher supérieur, cela en fonction des contraintes rencontrées.

Selon une première caractéristique de l'invention, les éléments de ranchers pour superstructures équipant les châssis de véhicules de transport, du type comprenant des ranchers en deux demi-parties articulées à leurs bases inférieure et supérieure, lesdits ranchers s'emboîtant l'un dans l'autre et étant associés par un dispositif de verrouillage, ledit rancher inférieur présentant un profil en U avec deux ailes latérales, sont remarquables en ce que le rancher inférieur présente, côté extérieur, dans sa partie haute, un logement intégré susceptible de constituer la zone de réception et de positionnement de l'extrémité inférieure du rancher supérieur, ledit rancher supérieur s'engageant dans ledit logement présentant essentiellement une section creuse intérieurement pour autoriser le passage d'un moyen de verrouillage des deux ranchers entre eux, le rancher supérieur présentant des moyens d'articulation susceptibles de coopérer avec des moyens établis à l'extrémité supérieure du rancher inférieur.

Selon une autre caractéristique, le logement établi sur le rancher inférieur est défini par un évidement central, vertical, ouvert à sa partie haute, la paroi de fond dudit logement étant constituée par une patte profilée de section en U fixée à la paroi en regard de la face de fond du rancher inférieur, et en ce que latéralement et de part et d'autre de l'évidement sont disposés, dans la partie supérieure et côté intérieur du rancher, des moyens profilés susceptibles de limiter en déplacement les mouvements du rancher supérieur.

Selon une autre caractéristique, les ranchers inférieur et supérieur sont verrouillés ou déverrouillés par un mécanisme comprenant une poignée de manoeuvre profilée susceptible d'autoriser la commande en déplacement du levier de verrouillage du rancher supérieur, et d'une patte de verrouillage du rancher inférieur, ladite poignée étant agencée en sa partie arrière avec une forme en moyeu formant came montée sur un axe de liaison, ladite partie formant moyeu présentant des zones en saillie et des évidements autorisant le positionnement et le déplacement d'axes associés au mécanisme de verrouillage des ranchers inférieur et supérieur.

Ces caractéristiques et d'autres encore ressortiront bien de la suite de la description.

Pour fixer l'objet de l'invention illustré non limitativement aux figures des dessins où :

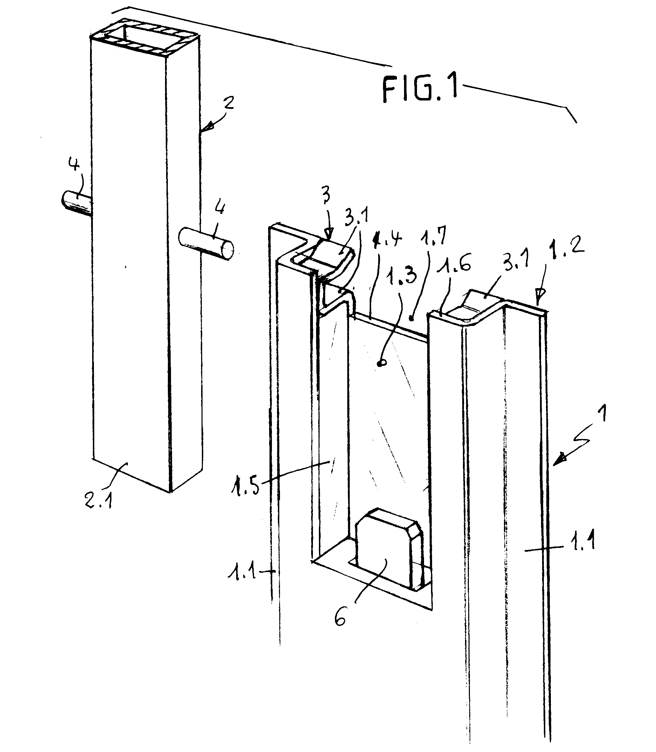

La figure 1 est une vue en perspective montrant la fixation et l'articulation du rancher supérieur par rapport au rancher inférieur selon l'invention.

La figure 2 est une vue en coupe longitudinale partielle montrant la mise en place du rancher supérieur sur le rancher inférieur.

La figure 3 est une vue en coupe longitudinale partielle selon la figure 2 montrant la fixation et le verrouillage en position du rancher inférieur par rapport au rancher supérieur.

La figure 4 est une vue de face illustrant le montage des deux ranchers avec un dispositif de verrouillage des deux éléments.

La figure 5 est une vue partielle de profil montrant la position des ranchers supérieur et inférieur en position verrouillée haut et bas.

La figure 6 est une vue selon la figure 5 montrant dans une position intermédiaire le déverrouillage en partie haute du rancher supérieur, le rancher inférieur étant en position verrouillée.

La figure 7 est une vue montrant le déverrouillage du rancher inférieur alors que le rancher supérieur reste en position verrouillée.

La figure 8 est une vue selon la figure 7 illustrant le déverrouillage des ranchers inférieur et supérieur.

Afin de rendre plus concret l'objet de l'invention, on le décrit maintenant d'une manière non limitative aux figures des dessins.

On a représenté le rancher inférieur référencé dans son ensemble par (1) et le rancher supérieur dans son ensemble par (2).

Le rancher inférieur présente un profil en U avec deux ailes latérales (1.1) disposées de part et d'autre du corps du rancher et permettant l'appui sur tous éléments de carrosserie.

Selon l'invention, dans sa partie supérieure (1.2), le rancher inférieur (1) présente, côté extérieur, un logement défini par un évidement (1.3) central vertical ouvert à sa partie haute, et profilé pour constituer la zone de réception et de positionnement de l'extrémité inférieure (2.1) du rancher supérieur (2). La paroi de fond verticale de ce logement est avantageusement constituée par une plaque profilée (1.4) présentant une section en U avec des ailes (1.5) fixées par soudure ou autrement à la paroi en regard de la face de fond (1.6) du rancher inférieur.

Dans son plan supérieur, la plaque (1.4) est sensiblement en retrait par rapport à ses ailes latérales de façon à définir un dégagement (1.7) facilitant l'introduction et le pivotement du rancher supérieur lors de sa mise en place. Latéralement et de part et d'autre de l'évidement précité, dans sa partie supérieure, côté intérieur du rancher, sont prévus des moyens profilés (3) susceptibles de limiter en déplacement les mouvements du rancher supérieur.

Plus précisément, ces moyens constituent des zones de réception et de guidage d'axes profilés (4) disposés latéralement sur le rancher supérieur. Lesdits axes sont positionnés à l'horizontal et viennent ainsi s'engager dans les moyens (3) qui présentent un profil en crochet autorisant le positionnement du rancher supérieur mais évitant son relevage vertical par un effet de butée. Ces crochets présentent une forme profilée en U, de sorte que les ailes latérales (3.1) restent dans un plan horizontal. Ces moyens (3) sont fixés de toute manière appropriée à l'extrémité supérieure du rancher (1) de part et d'autre de l'évidement central (1.3).

Selon l'invention, le rancher supérieur est conçu simplement à partir d'un profilé de section rectangulaire ou carrée, creux intérieurenent, susceptible de venir s'emboîter et s'engager dans l'évidement de devant formé sur le rancher inférieur. Le relevage du levier (6) permet son introduction dans la cavité du rancher supérieur.

Avantageusement, le rancher inférieur est agencé sous l'évidement avec une pièce profilée en U (5) intégrée et fixée de toute manière appropriée et dont les ailes (5.1) horizontales sont agencées avec des ouvertures (5.2) profilées pour autoriser le passage et le déplacement d'un levier (6) de manoeuvre et de verrouillage des deux ranchers entre eux.

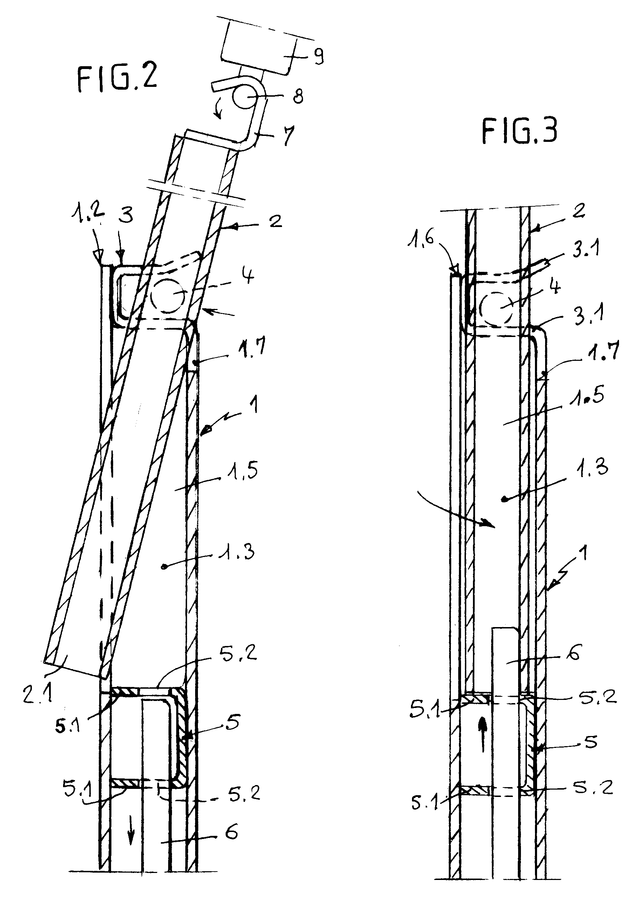

Ainsi qu'il apparaît figure 2 le rancher supérieur de construction simplifiée présente par exemple à son extrémité supérieure un élément formant crochet (7) susceptible de s'engager sur un anneau (8) ou similaire fixé à la barre de rive (9) supérieure de la superstructure.

Ainsi, selon l'invention, la conception et la réalisation du rancher supérieur, sont extrêmement simplifiées par rapport à tous les systèmes connus à ce jour. La mise en place du rancher supérieur s'effectue par ses axes latéraux de débordement qui viennent s'engager par l'arrière dans les crochets formés à l'extrémité supérieure du rancher inférieur, ainsi qu'illustré figure 2. La partie basse du rancher supérieur est préalablement introduite par la zone d'accès supérieure de l'évidement permettant ensuite par basculement et pivotement la fixation de l'ensemble. La section du rancher supérieur est etroitement adaptée au profil de l'évidement du rancher inférieur pour assurer une bonne tenue de l'ensemble.

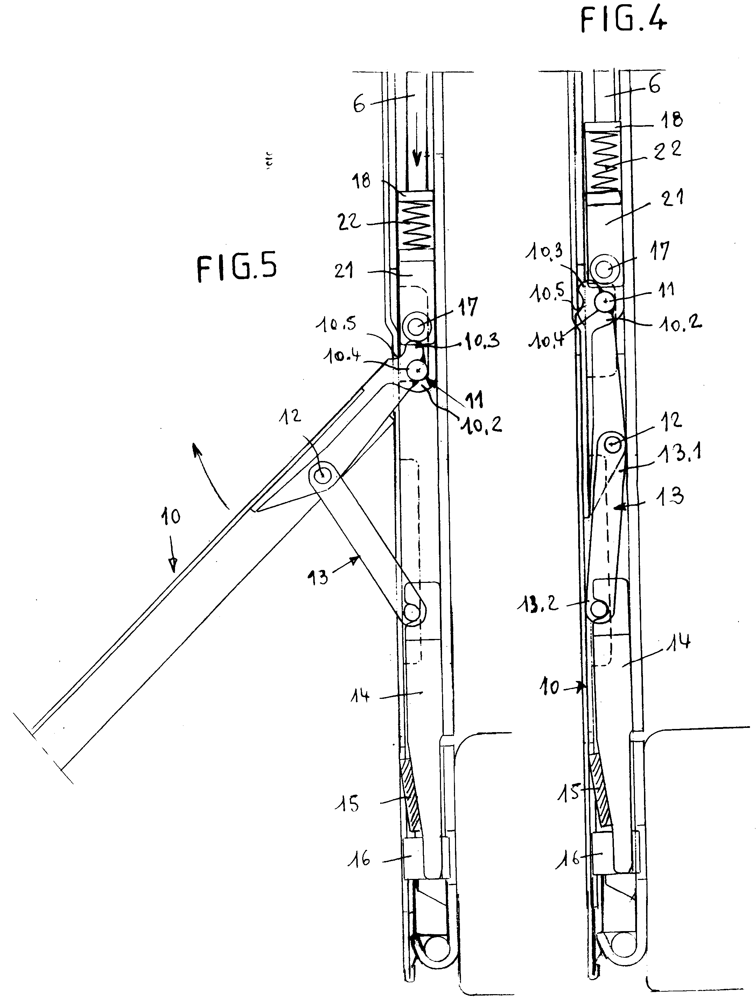

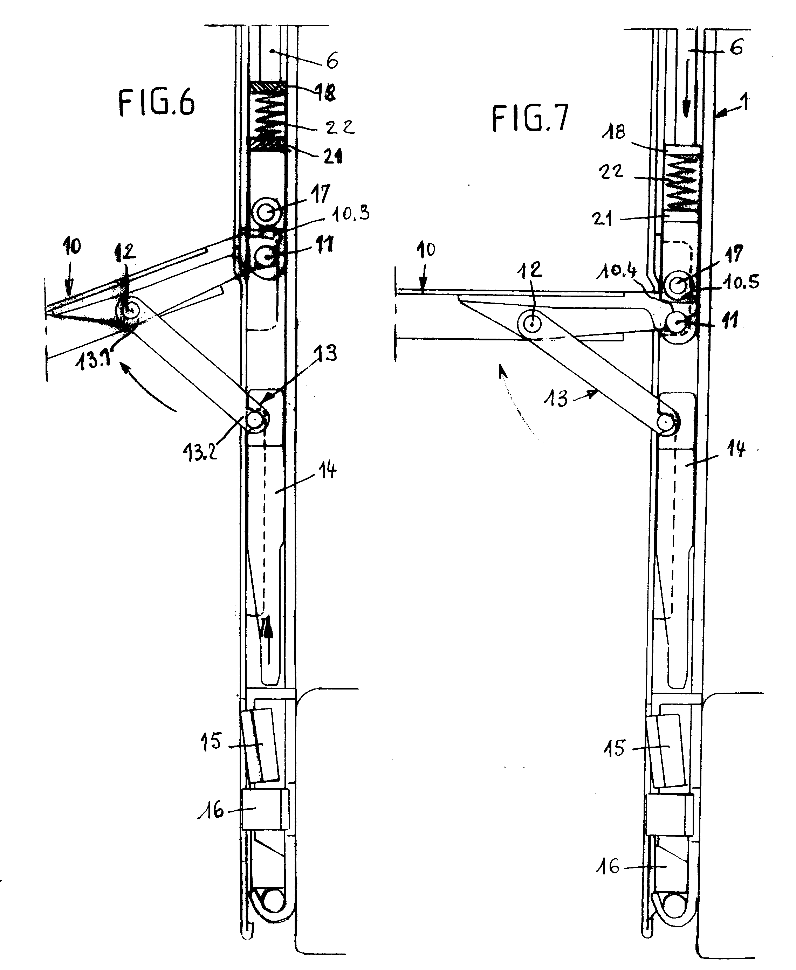

Selon une autre caractéristique de l'invention, les deux ranchers inférieur et supérieur peuvent être libérés ou verrouillés par un mécanisme illustré aux figures 4 à 8, ce mécanisme permettant, en phase normale d'utilisation, le déverrouillage ou le verrouillage préalable du rancher supérieur puis du rancher inférieur. En cas de difficulté du déverrouillage du rancher supérieur pour des raisons diverses, ce mécanisme permet alors le déverrouillage préalable du rancher inférieur puis ensuite du rancher supérieur.

En se référant aux dessins, le mécanisme de verrouillage comprend essentiellement une poignée de manoeuvre (10) située dans la partie basse du rancher inférieur, cette poignée étant montée à articulation sur un axe (11) transversal susceptible de se déplacer dans des ouvertures oblongues (1.8) formées sur les parois intérieures du rancher (1) et formant limiteur de course et correspondant à la longueur suffisante pour le déverrouillage des ranchers en parties haute et basse.

Cette poignée est conformée avec une nervure centrale (10.1) susceptible d'autoriser la fixation et l'articulation d'une extrémité (13.1) d'une biellette (13) sur un axe (12) de liaison.

L'autre extrémité (13.2) de la biellette est associée à une patte de verrouillage (14) susceptible de pénétrer dans un anneau (15) disposé et positionné sur un support fixe d'ancrage (16) et d'articulation de la partie basse du rancher inférieure par rapport au bâti.

De manière avantageuse, l'extrémité arrière de la biellette forme moyeu (10.8) monté sur l'axe (11). Ce moyeu est agencé lui-même pour former came, en présentant des parties en saillie (10.2 - 10.3) et des évidements (10.4 - 10.5). L'évidement (10.4) vient en appui sur l'axe (11) précité. L'évidement (10.5) peut coopérer avec un axe (17) associé au levier de verrouillage du rancher supérieur ainsi qu'il apparaîtra par la suite. Les parties (10.2 - 10.3) forment chemin de roulement ou came.

Le rancher supérieur (2) est verrouillé par le levier (6) qui est engagé verticalement à l'intérieur de la zone centrale du rancher inférieur. Le levier (6) de grande longueur est fixé sur un étrier (18) dont les ailes sont montées et fixées autour de l'axe (11) précité. Le levier reçoit une plaquette formant cavalier (19) à un endroit approprié de sa longueur pouvant constituer un plan d'appui d'un ou de plusieurs ressorts de rappel (20) venant en butée contre la pièce profilée (5) précitée.

L'étrier (18) est lui-même agencé pour recevoir entre ses branches une forme en chape (21) de profil complémentaire, disposé de manière à s'emboîter dans ledit étrier avec un ressort d'écartement et de rappel élastique (22) de mise en tension. Les ailes de la chape reçoivent un axe (17) qui est susceptible de venir en appui sur le moyeu de la biellette et plus particulièrement sur le partie formant came (10.3), et sous l'effet de détente du ressort (22) s'engager dans l'évidement (10.5) précité, en fonction des positions de la poignée de manoeuvre.

Ainsi qu'il apparaît aux dessins (figure 4), les éléments de ranchers inférieur et supérieur sont en situation de verrouillage haut et bas. Dans ce cas, le moyeu de la poignée de manoeuvre se trouve dans un plan vertical intégré dans le rancher inférieur, et l'axe (17) se trouve sensiblement en appui sur la saillie supérieure (10.3) du moyeu. Le levier (6) étant relevé, le premier ressort de rappel (21) situé en partie haute est comprimé et mis en tension par l'effet de rapprochement de la plaquette (19) par rapport à la pièce (5) à position fixe. On procède normalement et préalablement au déverrouillage du rancher supérieur. Le relevage partiel de la poignée de manoeuvre va permettre dans un premier temps l'abaissement du levier (6) et la libération du ressort (21), ainsi que le dégagement de l'axe (17) de l'évidement (10.5), en provoquant alors la compression du ressort (22) situé entre l'étrier et la chape. L'axe (23) vient alors se positionner sensiblement au-dessus sur la partie supérieure du moyeu de la poignée de verrouillage. Le relevage complémentaire de la poignée de manoeuvre va permettre l'encliquetage de l'axe (17) dans l'évidement (10.5) alors que l'axe (11) est toujours centré dans l'évidement (10.4) du moyeu. Ainsi, on procède au relevage de la patte de verrouillage du rancher inférieur.

Une opération inverse s'effectue lors du verrouillage de l'ensemble.

Il y a lieu de noter que la forme particulière du moyeu avec ces deux évidements opposés (10.4 - 10.5) permet d'obtenir la formation d'un point dur en position basse et un point dur en position haute, autorisant ainsi des effets de clipsage en position de l'axe (17).

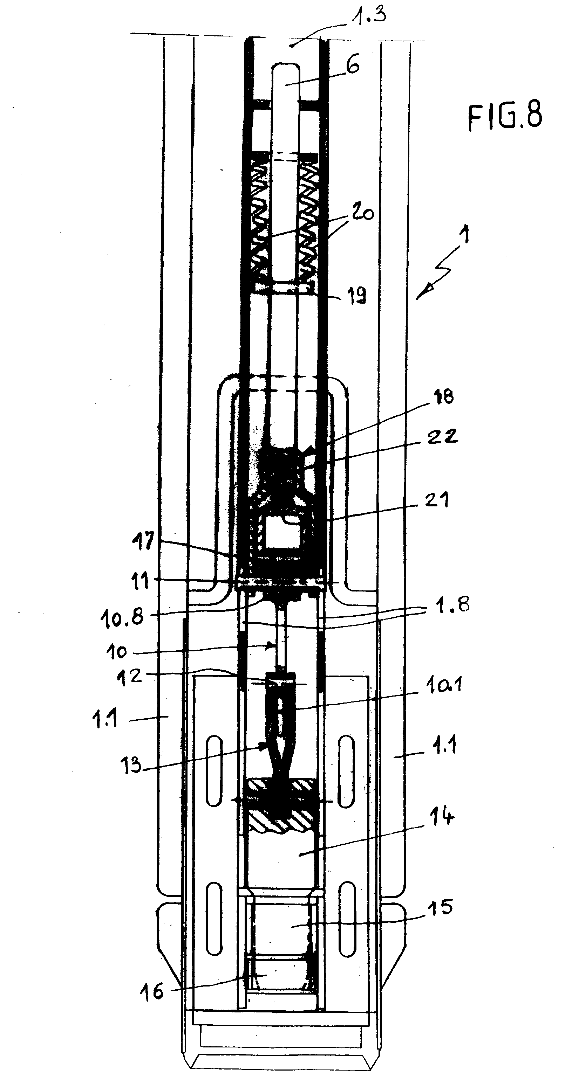

Dans l'hypothèse où pour une raison quelconque le déverrouillage du rancher supérieur ne pourrait s'exécuter, cela par exemple par un blocage éventuel du levier (6), la manoeuvre de la poignée va exercer un effort sur ce levier et libérer et déverrouiller les ranchers inférieur puis supérieur pour arriver en position illustrée figure 8.

Ainsi, selon l'invention, le profil particulier de la barre associée à la poignée de manoeuvre permet un déverrouillage alternatif des ranchers supérieur et inférieur en fonction des contraintes rencontrées.

## Revendications

**-1-** Eléments de ranchers pour superstructures équipant les châssis de véhicules de transport, du type comprenant des ranchers en deux demi-parties articulées à leurs bases inférieure et supérieure, lesdits ranchers s'emboîtant l'un dans l'autre et étant associés par un dispositif de verrouillage, ledit rancher inférieur (1) présentant un profil en U avec deux ailes latérales (1.1), caractérisés en ce que le rancher inférieur présente, côte extérieur, dans sa partie haute, un logement (1.3) intégré susceptible de constituer la zone de réception et de positionnement de l'extrémité inférieure (2.1) du rancher supérieur (2), ledit rancher supérieur s'engageant dans ledit logement présentant essentiellement une section creuse intérieurement pour autoriser le passage d'un moyen de verrouillage (6) des deux ranchers entre eux, le rancher supérieur présentant des moyens (4) d'articulation susceptibles de coopérer avec des moyens (3) établis à l'extrémité superieure du rancher inférieur.

**-2-** Eléments de rancher selon la revendication 1, caractérisés en ce que le logement (1.3) établi sur le rancher inférieur (1) est défini par un évidement central, vertical, ouvert à sa partie haute, la paroi de fond dudit logement étant constituée par une patte profilée (1.4) de section en U fixée à la paroi en regard de la face de fond (1.6) du rancher inférieur, et en ce que latéralement et de part et d'autre de l'évidement sont disposés, dans la partie superieure et côté intérieur du rancher, des moyens profilés (3) susceptibles de limiter en déplacement les mouvements du rancher supérieur.

**-3-** Eléments de rancher selon les revendications 1 et 2 ensemble, caractérisés en ce que les moyens profiles (3) présentent un profil en crochet autorisant le positionnement du rancher supérieur, dont les ailes (3.1) sont dans un plan horizontal, et étant susceptibles de recevoir des axes profilés (4) disposés latéralement sur le rancher supérieur, lesdits axes étant positionnes à l'horizontal.

**-4-** Eléments de rancher selon la revendication 3, caractérisés en ce que la plaque (1.4) est sensiblement en retrait par rapport à ses ailes latérales de façon à définir un dégagement (1.7) autorisant l'introduction et le pivotement du rancher supérieur.

**-5-** Eléments de rancher selon la revendication 1, caractérisés en ce que le rancher inférieur est agence sous l'évidement avec une pièce profilée en U (5) intégrée et fixée au rancher inférieur, les ailes (5.1) horizontales de ladite pièce étant agencées avec des ouvertures profilées autorisant le passage et le déplacement d'un levier (6) de manoeuvre et de verrouillage des ranchers supérieur et inférieur entre eux, pour s'engager dans la section du rancher supérieur.

**-6-** Eléments de rancher selon la revendication 1, caractérisés en ce que les ranchers inférieur et supérieur sont verrouillés ou déverrouillés par un mécanisme comprenant une poignée de manoeuvre (10) profilée susceptible d'autoriser la commande en déplacement du levier de verrouillage (6) du rancher supérieur, et d'une patte de verrouillage (14) du rancher inférieur, ladite poignée étant agencée en sa partie arrière avec une forme en moyeu (10.8) formant came montée sur un axe (11) de liaison, ladite partie formant moyeu présentant des zones en saillie (10.2 - 10.3) et des évidements (10.4 - 10.5) autorisant le positionnement et le déplacement d'axes associes au mécanisme de verrouillage des ranchers inférieur et supérieur.

**-7-** Eléments de rancher selon la revendication 6, caractérisés en ce que l'évidement (10.4) formé sur le moyeu vient en appui sur l'axe (11) d'articulation de la poignée, l'évidement (10.5) coopérant avec un axe (17) associe au levier de verrouillage (6) du rancher supérieur, ledit levier (6) étant fixe sur un étrier (18) dont les ailes sont montées sur ledit axe (11) précité.

**-8-** Eléments de rancher selon les revendications 2 et 7, caractérisés en ce que le levier (6) reçoit sur sa longueur un cavalier (19) autorisant le positionnement d'un ou plusieurs ressorts de rappel (20) venant en butée contre la pièce profilée (5).

**-9-** Eléments de rancher selon la revendication 7, caractérisés en ce que l'étrier est agencé pour recevoir, entre ses branches, une forme en chape (21) de profil complémentaire s'emboîtant dans ledit étrier avec un ressort de rappel élastique (22) de mise en tension, les ailes de la chape recevant un axe (17) susceptible de venir en appui sur le moyeu de la biellette et plus particulièrement sur la partie formant came et se centrer dans l'évidement (10.5) dudit moyeu en fonction des positions de la poignée de manoeuvre.

**-10-** Eléments de rancher selon les revendications 6 à 9, caractérisés en ce que lesdits évidements (10.4 - 10.5) formés sur le moyeu définissent la formation de points durs en position basse et en position haute autorisant des effets de clipsage de l'axe 17.
